# EUROPEAN PATENT SPECIFICATION

(11) **EP 4 270 290 B1**
(45) Date of publication and mention of the grant of the patent: **08.04.2026**
(21) Application number: 21909988.4
(22) Date of filing: 05.11.2021
(51) Int. Cl.: G06Q 30/02, G06Q 30/06, G16Y 20/20, G16Y 40/10, G06Q 30/01, G06F 21/64, G06Q 10/08, G06Q 10/101, G06Q 10/10, G06Q 10/20, G06Q 30/018, G06Q 40/04, G06Q 50/04

(54) **INFORMATION MANAGEMENT METHOD AND INFORMATION MANAGEMENT PROGRAM**
INFORMATIONSVERWALTUNGSVERFAHREN UND INFORMATIONSVERWALTUNGSPROGRAMM
PROCÉDÉ DE GESTION D'INFORMATIONS ET PROGRAMME DE GESTION D'INFORMATIONS

(30) Priority: 23.12.2020 JP 2020213997
(43) Date of publication of application: 01.11.2023
(73) Proprietor: DENSO CORPORATION, Kariya-city, Aichi-pref. 448-8661 (JP)
(72) Inventor: OKABE Tatsuya, Kariya-city Aichi-pref., 448-8661 (JP)
(74) Representative: Winter, Brandl - Partnerschaft mbB
(86) International application number: PCT/JP2021/040803
(87) International publication number: WO 2022/137834

(56) References cited:
- JP-A- 2007 011 817
- JP-A- 2020 021 134
- JP-A- 2020 119 207

## Description

### CROSS REFERENCE TO RELATED APPLICATION

This application is based on Japanese Patent Application No. 2020-213997 filed on December 23, 2020.

### TECHNICAL FIELD

The disclosure herein relates to information management technology

### BACKGROUND ART

Patent Literature 1 discloses a method for facilitating traceability of digital assets using a blockchain that utilizes a distributed ledger. In JP 2020 - 532 213 A, hash values of digital asset source files, binary files, etc. are calculated, and each hash value is registered in a blockchain through a committing process on a distributed ledger.

### SUMMARY OF THE INVENTION

The hash value recorded in the distributed ledger in Patent Literature 1 is concealed data that cannot be restored to original data such as a source file and a binary file. Therefore, if the technology disclosed in JP 2020 - 532 213 A is applied to the information management method related to a supply chain, even information, such as trade secrets, that cannot be disclosed to other traders can be managed in a state where other traders can refer to the information by converting the information into concealed data such as hash values.

However, in case where a product or merchandise provided by a supply chain is defective, for example, it may be necessary to disclose even such information as a trade secret to other traders that form the supply chain. In such a case, there is no means for a particular trader who needs concealed information to appropriately acquire pre-concealed information from other traders. As a result, when it is applied to information management for a supply chain, convenience may not be ensured sufficiently.

Reference is further made to JP 2007 011 817 A, JP 2020 119 207 A and JP 2020 21 134 A which were determined as state of the art. JP 2007 011 817 A describes a traceability verification system keeping a structure of a supplier secret in a supply chain. JP 2020 119 207 A describes a database management service providing system. JP 2020 21 134 A describes a distribution management device.

An object of the present invention is to provide an information management method and an information management program that ensure convenience of information related to a supply chain while reducing the risk of falsification.

The object is solved by the information management method according to claim 1 and the information management program according to claim 6.

The invention is set out in the appended set of claims.

In the above-described aspects, if the receipt terminal device of the direct trader that has received the providing request does not store the pre-concealed information, the providing request is transferred, with the receipt terminal device of the direct trader, in the transmission direction of a transmission route to another receipt terminal device. Therefore, even if the particular terminal device does not recognize the receipt terminal device that stores the pre-concealed information, the providing request transmitted from the particular terminal device can eventually reach the receipt terminal device that stores the pre-concealed information. Then, when the providing request arrives at the receipt terminal device that stores the pre-concealed information, the pre-concealed information is returned to the particular terminal device via the return route that is along the transmission route for the providing request in an opposite direction.

According to the above-described process, even if the pre-concealed information that must be kept confidential is managed individually by the respective trader, the particular trader can obtain the necessary pre-concealed information via the direct trader with which the particular trader has a direct business relationship. In addition, the pre-concealed data can be provided to a particular trader without exposing the relationship with the trader to other traders. In addition, since the concealed data is managed in a state where each trader can refer to the concealed data, the particular trader can verify the acquired pre-concealed information by referring to the concealed data that is very less likely to be falsified.

Therefore, it is possible to ensure usability of information related to the supply chain while reducing the risk of falsification and ensuring non-disclosure of a trade secret and the like.

The reference numerals in the parentheses in claims are just examples of the correspondence with the specific components in the embodiments, and do not limit the scope of the present disclosure.

### BRIEF DESCRIPTION OF DRAWINGS

FIG. 1 is a diagram illustrating an entire supply chain management system according to an embodiment of the present disclosure.
FIG. 2 is a block diagram illustrating an electrical configuration of a supplier terminal device.
FIG. 3 is a sequence diagram illustrating a chain generation process.
FIG. 4 is a diagram for explaining undisclosed information managed as pre-concealed data by each trader.
FIG. 5 is a diagram for explaining a process in which undisclosed information is concealed and stored in a blockchain.
FIG. 6 is a diagram for explaining an information providing process where a request for providing undisclosed information is transmitted to a trader on an upstream side.
FIG. 7 is a diagram for explaining an information providing process where a request for providing undisclosed information is transmitted to a trader on a downstream side.
FIG. 8 is a sequence diagram illustrating a data acquisition process executed during the information providing process.
FIG. 9 is a sequence diagram illustrating a data verification process executed during the information providing process.

### DESCRIPTION OF EMBODIMENTS

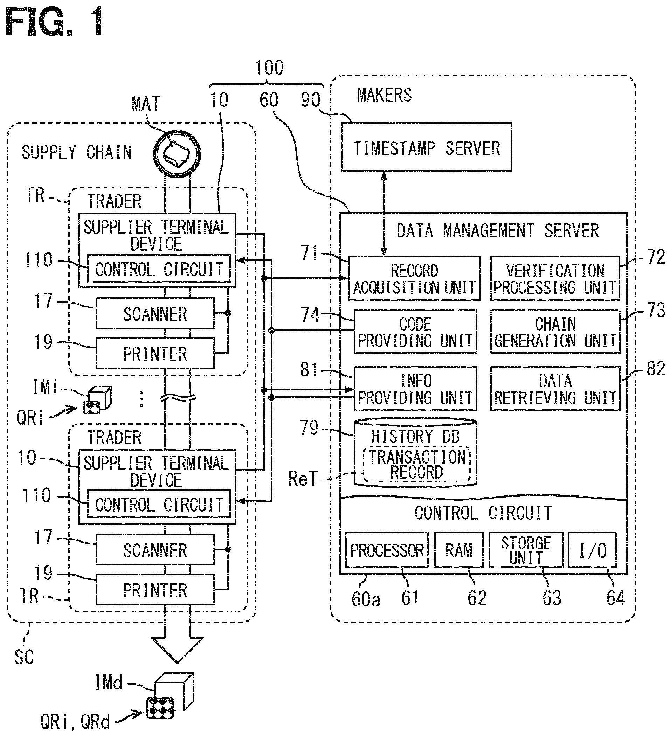

A supply chain management system 100 of the present disclosure shown in FIG. 1 is configured to manage transaction records ReT of items traded between traders TR in a supply chain SC including the traders TR. The supply chain SC is a connection between the traders for delivering, for example, industrial products, agricultural products, and marine products to end users. For example, in the supply chain SC for delivering the industrial products to end users, the traders TR may include material mining companies, material producing companies, processing companies, transport companies, and distribution companies. In this case, the supply chain SC from a raw material MAT to a final product is built up. The final product is delivered, as a distribution item IMd, to an end user.

The transaction record ReT of the supply chain SC is history information used for achieving traceability of intermediate items IMi traded between traders TR and distribution items IMd supplied to end users. The transaction record ReT contains information such as expiry dates, production dates, and raw materials MAT. In the supply chain management system 100, techniques of a blockchain are used to manage the transaction record ReT for protecting the transaction record ReT from tampering with.

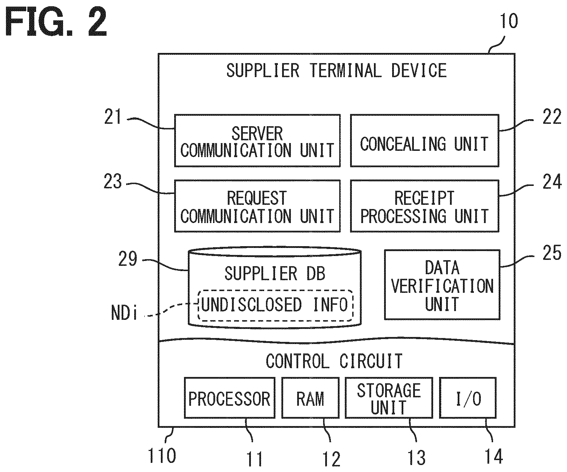

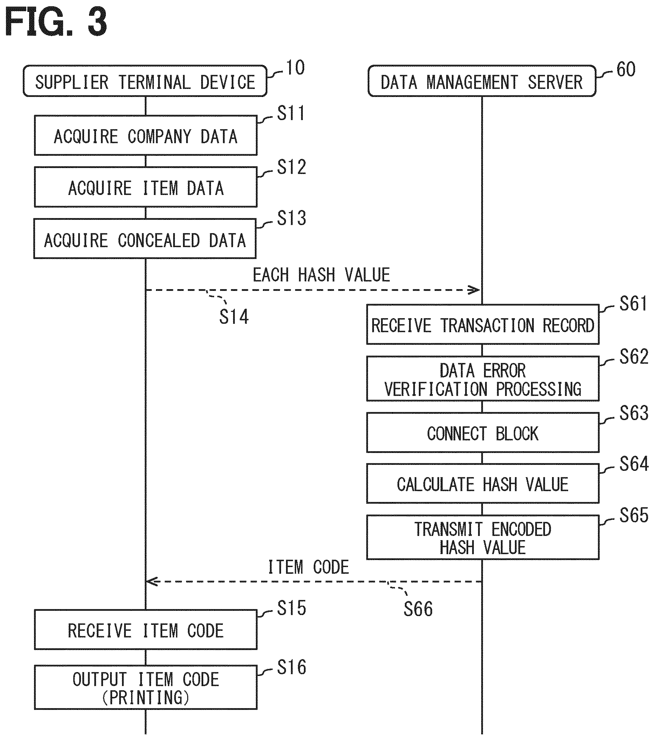

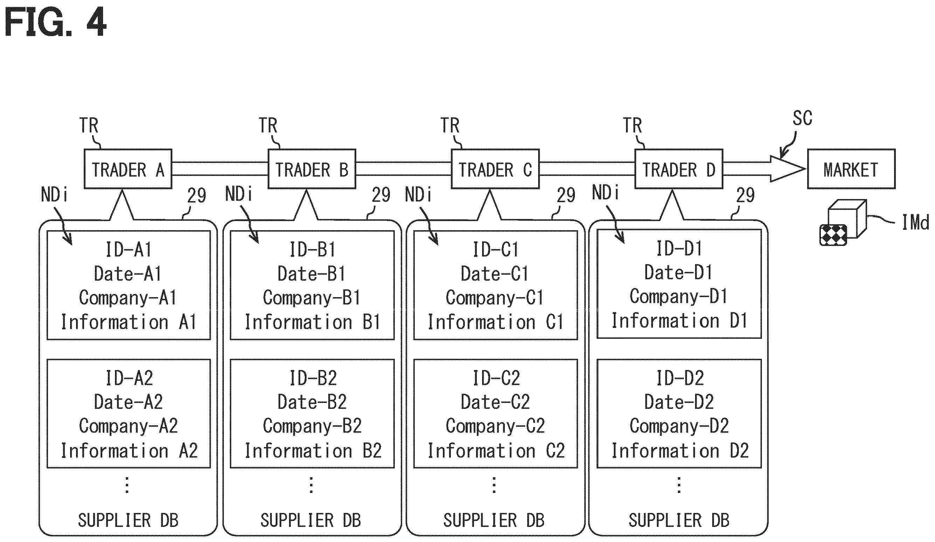

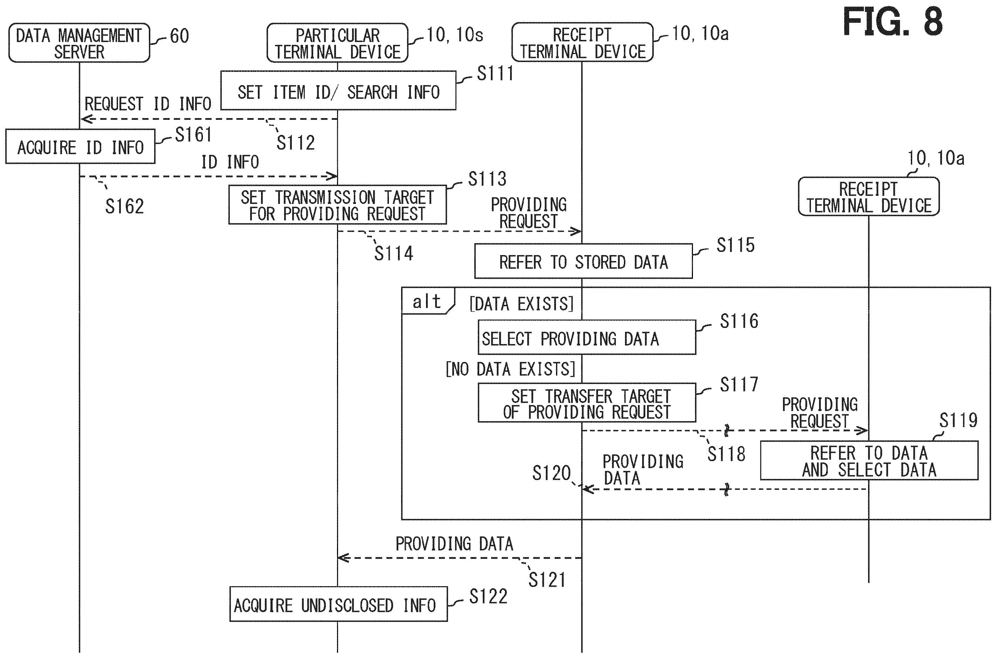

The supply chain management system 100 has two main functions. The supply chain management system 100 is configured to collect and accumulate the transaction records ReT until the distribution item IMd is manufactured by performing a chain generation process (see FIG. 3). In addition, the supply chain management system 100 enables, by performing a data acquisition process (see FIG. 8), sharing of undisclosed information NDi (see FIGS. 2 and 4) that is not disclosed to other traders TR during a normal operation.

The undisclosed information NDi is, for example, a trade secret such as information indicating which trading company the raw material MAT was purchased from, when it was acquired, and how much it costs. The undisclosed information NDi is stored in a supplier database 29 (see FIGS. 2 and 4) of each supplier terminal device 10, and is normally not disclosed even to other traders TR that have business relationships. However, if some kind of trouble occurs in the intermediate item IMi and the distribution item IMd related to the trader TR, it is preferable if the undisclosed information NDi, after obtaining an approval from the holder of the information, is provided to another party to investigate the cause of the trouble.

As described above, the supply chain management system 100 has the function of supplying the undisclosed information NDi in addition to the function of accumulating transaction records ReT as the function of managing information related to the supply chain SC. The supply chain management system 100 includes multiple supplier terminal devices 10, a timestamp server 90, and at least one data management server 60. Each supplier device 10, the timestamp server 90, and the data management server 60 are connected to the network to communicate with each other.

At least one supplier terminal device 10 shown in FIGS. 1 to 3 is provided at a facility of each of the traders in the supply chain SC, or the suppliers that provide parts, materials, or products. The supplier terminal device 10 is used by workers in the facility of the supplier where the supplier terminal device 10 is installed. The supplier terminal device 10 is configured to transmit, to the data management server 60, the delivery record of the intermediate item IMi that is to be delivered to the trader TR. In addition, the supplier terminal device 10 is configured to receive, from the data management server 60, attachment information to be attached to the intermediate item IMi that is being shipped. Specifically, the supplier terminal device 10 treats item data, company data, and the like.

Item data is data attached to both intermediate items IMi and distribution items IMd that are traded between the traders TR. A two-dimensional code (hereinafter, item code QRi) such as a QR code (registered trademark) in which the item data is recorded is printed on a paper medium or the like and is attached to each of the intermediate item IMi and the distribution item IMd. The attachment position of the item code QRi is not necessarily limited to the product itself, and may be any of packages, certificates, or the like.

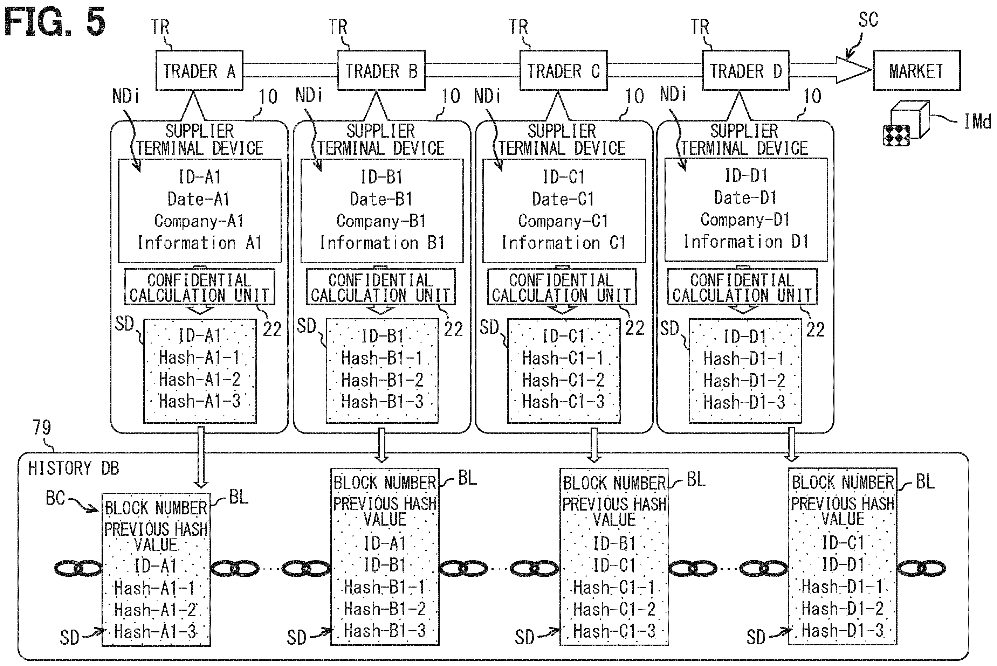

In the item code QRi, at least a hash value as item data generated in association with the transaction record ReT and a contact information (an IP address) on the transaction record ReT are recorded. The hash value is generated with a constant number of bits using a last block BL (see FIG. 5) of the blockchain BC, as will be described later. The data size of the item data can be reduced by using the hash value as the item data. As a result, the item data is recorded in the item code QRi, and accordingly the item data can be distributed along with the intermediate item IMi and the distribution item IMd. Alternatively, a URL for inquiring about the transaction record ReT may be recorded in the item code QRi instead of the above-mentioned IP address. In addition, if the contact information to inquiry about the transaction record ReT is publicly disclosed on a homepage or the like related to the distribution item IMd, the description of the IP address and URL in the item code QRi may be omitted.

The company data is identification data indicating a trader TR (supplier). Each of the suppliers is given unique company data by a certifier which manages the supply chain SC. A two-dimensional code (hereinafter, referred to as a company code) such as a QR code recording the company data is printed on a paper medium or the like and distributed to each supplier in advance. Such company data may be written in hardware such as the supplier terminal device 10 and provided to the supplier together with the hardware. In the company code, a hash value that is associated with the supplier by the manager of the supply chain SC is recorded as the company data. Generation and distribution of the company code may be carried out by the system supplier of the supply chain management system 100 instead of the manager of the supply chain SC.

The supplier terminal device 10 is an electronic device having computer function such as a smartphone, a tablet terminal device, and a dedicated terminal device. The supplier terminal device 10 is electrically connected to a scanner 17 and a printer 19. At least one of the scanner 17 and the printer 19 may be integrally formed with the supplier terminal device 10.

The scanner 17 is a device that reads the item data, the company data, etc. recorded in a two-dimensional code. The scanner 17 includes an area sensor in which CCD elements are arranged two-dimensionally. The scanner 17 is configured to scan the two-dimensional code printed on a paper medium or the like and output the scanned information of the two-dimensional code to the supplier terminal device 10.

The printer 19 is an output device configured to print, on a paper medium (sticker or the like), new item code QRi provided from the data management server 60. The item code QRi printed out by the printer 19 is attached to an intermediate item IMi (i.e., a shipping item) to be shipped and is distributed to the next trader TR together with the intermediate item.

The supplier terminal device 10 has a control circuit 110 as a main component. The control circuit 110 includes a processor 11, RAM 12, a storage unit 13, an input/output interface 14, and a bus connecting these elements to each other. The processor 11 is hardware for arithmetic processing combined with the RAM 12. The processor 11 accesses the RAM 12 to execute various processes related to data communication. The storage unit 13 stores, as supply chain management programs, a record generation program for accumulating the transaction records ReT and an information sharing program for sharing the undisclosed information NDi. The supplier terminal device 10 includes functional units such as a server communication unit 21 and a concealing unit 22 based on the record generation program. In addition, the supplier terminal device 10 includes functional units such as a request communication unit 23, a receipt processing unit 24, and a data verification unit 25 based on the information sharing program.

The server communication unit 21 communicates with the data management server 60 to transmit information as a transaction record ReT to the data management server 60. The server communication unit 21 acquires each hash value, which is the item data and the company data, from the image data of each code read by the scanner 17 (see S11 and S12). Further, the server communication unit 21 acquires concealed data SD (see FIG. 5) generated by the concealing unit 22 (see S13). The server communication unit 21 transmits a hash value of each of the item data, company data, and concealed data SD to the data management server 60 as a current transaction record ReT (see S14). Further, the server communication unit 21 receives the image data of the new item code QRi generated by the data management server 60 based on the transaction record ReT transmitted to the data management server 60 (see S15). The server communication unit 21 causes the printer 19 to output the received item code QRi (see S16).

The concealing unit 22 selects at least one piece of the undisclosed information NDi to be stored under the control of the data management server 60 from among a plurality (many) of pieces of the undisclosed information NDi managed by the history database 79. Based on the item data delivered to the trader TR, the concealing unit 22 selects all pieces of the undisclosed information NDi related to processes such as transportation processes and storage processes performed by the trader TR. In other words, all pieces of the undisclosed information NDi related to shipping items shipped from the trader TR are extracted from the supplier database 29 .

The concealing unit 22 performs a calculation (a concealing process) for concealing the undisclosed information NDi retrieved from the supplier database 29 . As an example, the concealing unit 22 uses the undisclosed information NDi as input information, and performs a process of inputting the undisclosed information NDi into a hash function such as SHA256 to generate a hash value with a predetermined number of bits (for example, 256 bits) as concealed data SD. The concealing unit 22 may generate the concealed data SD from the undisclosed information NDi using public private key means or the like.

The concealed data SD is generated from a plurality of classified pieces of the undisclosed information NDi for each of the traders TR. More specifically, the concealing unit 22 classifies a large number of pieces of the extracted undisclosed information NDi into a plurality of items according to predetermined rules, and generates the concealed data SD for each of the plurality of items from the classified undisclosed information NDi. Such classification into each item makes it possible to control disclosure and non-disclosure according to a provided party to whom the undisclosed information NDi is provided and thus to adjust a disclosing scope of the undisclosed information NDi.

For example, when a plurality of raw materials MAT or components are used by the trader TR, the concealing unit 22 classifies the undisclosed information NDi for each raw material MAT or each component, and generates the concealed data SD for each of the classified undisclosed information NDi. As another example, when a plurality of processes are carried out by a transactor TR, the concealing unit 22 classifies the undisclosed information NDi for each process, and generates the concealed data SD for each of the classified undisclosed information NDi. Further, the concealing unit 22 classifies the undisclosed information NDi for each item such as the raw material MAT and the trading company that purchases components, the date and time of acquisition, and the acquisition cost, and generates concealed data SD for each item.

The request communication unit 23 requests the supplier terminal device 10 associated with another trader TR to provide the undisclosed information NDi of a particular intermediate item IMi or distribution item IMd related to the trader TR. A request for providing the undisclosed information NDi (a providing request) is accompanied by search information that is used by other supplier terminals 10 to search for the undisclosed information NDi. The search information is, for example, information such as "raw material of XX component", "manufacturing time/date of XX component", and "origin and supplier of YY raw material".

The request communication unit 23 acquires ID information reflecting an item distribution flow from the data management server 60 in order to grasp the route for inquiring about the undisclosed information NDi for the intermediate item IMi or the distribution item IMd for which providing information is required. The ID information is information that records the history of receipt and shipment of intermediate items IMi in the supply chain SC, and is information that indicates the connection between traders TR (supplier terminal device 10) in a linear or tree form. As an example, when traders A to traders D constitute a supply chain SC that provides distribution items IMd, the request communication unit 23 acquires ID information that connecting a plurality of pieces of the company data (company ID) each of which is associated with a respective one of traders A to D. In this case, the ID information has contents such as "ID-D1->ID-C1->ID-B1->ID-A1" or "ID-A1->ID-B1->ID-C1->ID-D1 ". The company ID may be information included in the company code.

Based on the ID information, the request communication unit 23 determines another supplier terminal device 10 to which a request for providing the undisclosed information NDi (i.e., pre-concealed data) is to be transmitted. Specifically, the request communication unit 23 selects, as a transmission target for the providing request, a supplier terminal device 10 that is associated with a trader TR having a direction business relationship (hereinafter, referred to as a direct trader TR) in the supply chain SC with a particular trader TRs (i.e., a host trader TRs) that owns the supplier terminal device 10 (or the host terminal device).

In the following explanation, the supplier terminal device 10 that transmits the providing request and is tied to the particular trader TR (hereinafter, referred to as the particular trader TRs) that needs the undisclosed information NDi is referred to as a particular terminal 10s. In addition, the supplier terminal devices 10 in association with other traders TR other than the particular trader TRs are referred to as receipt terminal devices 10a.

The request communication unit 23 performs information tracking to acquire undisclosed information NDi from a previous step (i.e., an upstream side) of the supply chain SC and information tracking to acquire undisclosed information NDi from a following step (i.e., a downstream side) of the supply chain SC. Based on the ID information, the request communication unit 23 estimates whether the trader TR (hereinafter, referred to as a managing trader TRt) that manages the undisclosed information NDi that is target information of the providing request belongs to upstream traders or downstream traders with respect to the particular trader. The upstream traders are traders TR located on the upstream side of the particular trader TRs in the supply chain. The downstream traders are traders TR located on the downstream side of the specific trader TRs in the supply chain. When the request communication unit 23 estimates that the managing trader TRt belongs to the upstream side traders, the unit 23 transmits the providing request to the receipt terminal device 10a of the direct trader TRd on the upstream side of the specific trader TRs. On the contrary, when the request communication unit 23 estimates that the managing trader TRt belongs to the downstream side traders, the unit 23 transmits the providing request to the receipt terminal device 10a of the direct trader TRd on the downstream side of the specific trader TRs.

The receipt processing unit 24 is a functional unit that causes the supplier terminal device 10 to serve as the receipt terminal device 10a. The receipt processing unit 24 receives the providing request transmitted from the supplier terminal device 10 of the direct trader TRd. The receipt processing unit 24 confirms the intention of the direct trader TRd such as "approval" and "denial" on the providing request. Approval by the receipt processing unit 24 may be determined based on an input operation by the manager (the trader TRd) that stores the undisclosed information NDi, or may be automatically determined based on a predetermined approval/denial condition. The receipt processing unit 24 refers to the supplier database 29 of the supplier terminal device 10 (the host terminal device) based on search information attached to the providing request, and then determines whether the undisclosed information NDi requested by the providing request is stored in the supplier database 29 of the host terminal device.

When the receipt processing unit 24 determines that the undisclosed information NDi requested by the providing request is not stored in the supplier database 29, the unit 24 transfers the providing request to the receipt terminal device 10a of another direct trader TRd. Here, "the other direct trader TRd" has a direct business relationship with the trader TR that manages the receipt terminal device 10a, and is a trader TR different from the trader TR that is the source of transmitting or transferring the providing request.

Based on the ID information, the receipt processing unit 24 sets the direct trader TRd located at a step opposite to the source of transmitting the providing request in the supply chain SC as a transfer target of the providing request. Specifically, when the providing request is received from the receipt terminal device 10a of the direct trader TRd on a downstream side of the supply chain, the receipt processing unit 24 transfers the providing request to the receipt terminal device 10a of the other direct trader TRd on an upstream side of the supply chain. On the contrary, if the providing request is received from the receipt terminal device 10a of the direct trader TRd on an upstream side of the supply chain, the receipt processing unit 24 transfers the providing request to the receipt terminal device 10a of the other direct trader TRd on a downstream side of the supply chain. Furthermore, when the supply chain SC is tree-like, the receipt processing unit 24 transfers the providing request to a plurality of direct traders TRd.

When the receipt processing unit 24 determines that the undisclosed information NDi requested by the providing request is stored in the supplier database 29, the unit 24 retrieves the undisclosed information NDi conforming with the providing request from the supplier database 29. As described above, the undisclosed information NDi is classified into a plurality of items in advance and each classified undisclosed information is converted into the concealed data SD. Therefore, the receipt processing unit 24 identifies only one or more pieces of the undisclosed information NDi complying with the providing request from among the plurality of pieces of the undisclosed information NDi that are classified for each item, and selects the one or more pieces of the undisclosed information NDi as a reply target to the particular terminal device 10s.

The receipt processing unit 24 returns the undisclosed information NDi (i.e., providing data) selected as a reply target to the requesting particular terminal device 10s via a return route that is along a transmission route of the providing request in a reverse direction. The receipt processing unit 24 returns, to the particular terminal device 10s, the undisclosed information NDi and identification information for retrieving the concealed data SD corresponding to the undisclosed information NDi from the transaction record ReT. The identification information is information (hash ID, etc.) indicating a block number and a storage area within the block.

The receipt processing unit 24 returns at least one piece of the undisclosed information NDi retrieved from the supplier database 29 to the request communication unit 23 when directly receiving the providing request from the request communication unit 23 of the particular terminal device 10s. On the contrary, if the receipt processing unit 24 receives the providing request transferred from another receipt terminal device 10a, the receipt processing unit 24 returns the undisclosed information NDi to the receipt terminal device 10a that is a transferring source. In this case, the undisclosed information NDi of the managing trader TRt, which has no direct business relationship with the particular trader TRs, is provided to the particular trader TRs by cooperating with a plurality of the receipt processing units 24 .

When the receipt processing unit 24 determines that only part of pieces of the undisclosed information NDi requested in the providing request is stored in the supplier database 29, the unit 24 returns the stored part of the pieces of the undisclosed information NDi. In addition, the receipt processing unit 24 transfers the providing request for the remaining parts of the pieces of the undisclosed information NDi to another receipt processing unit 24. As described above, even if the undisclosed information NDi required by the specific trader TRs is under the control across the multiple traders TR, all the pieces of the undisclosed information NDi are provided to the particular terminal device 10s.

The data verification unit 25 verifies whether the undisclosed information NDi returned by the receipt processing unit 24 was tampered with. The data verification unit 25 acquires, from the data management server 60, public data necessary for verifying the undisclosed information NDi based on the search information provided together with the undisclosed information NDi. The public data is, for example, concealed data SD retrieved based on the verification information and is data uploaded by the supplier terminal device 10 of the managing trader TRt.

The data verification unit 25 cooperates with the concealing unit 22, applies a concealing process that was used to generate the concealed data SD to the acquired undisclosed information NDi, and calculates a hash value based on the undisclosed information NDi (i.e., pre-concealed data) as verification data. The data verification unit 25 compares the hash value of the verification data with the hash value of the concealed data SD obtained from the blockchain BC. If the hash value of the verification data matches the hash value of the concealed data SD, the data verification unit 25 determines that the acquired undisclosed information NDi has not been tampered with. On the other hand, if the hash value of the verification data and the hash value of the concealed data SD do not match each other, the data verification unit 25 determines that the obtained undisclosed information NDi may be tampered with.

The time stamp server 90 is a server device that mainly includes a computer. The time stamp server 90 generates time stamp data to be provided to the supplier terminal device 10 or the data management server 60. The time stamp server 90 acquires news articles distributed from a news distribution server connected to the network in association with information indicating date and time every day or every predetermined time, and generates time stamp data. The timestamp server 90 is configured to generate input information in which the date information, a character string of the news article, and a character string that has been specified in advance are combined in this order. The time stamp server 90 generates a hash value of a predetermined number of bits (for example, 256 bits) as time stamp data by inputting input information into a hash function such as SH-256.

The timestamp data is used, for example, as data associated with the date and time the intermediate item IMi was owned by a specific trader TR. As an example, when the transaction record ReT or the like is transmitted from the supplier terminal device 10 to the data management server 60, the time stamp server 90 provides the data management server 60 with the time stamp data stored in association with the transaction record ReT. As another example, the time stamp server 90 may provide the supplier terminal device 10 of each supplier with a two-dimensional code (a time stamp code), as image data, recording a hash value as the time stamp data. In this case, the time stamp data is transmitted from the supplier terminal device 10 to the data management server 60 as one of the transaction records ReT.

The data management server 60 is a host node configured to communicate with multiple supplier terminal devices 10. The data management server 60 and the timestamp server 90 are under the control of an administrator of the supply chain SC. The administrator is, for example, a manufacture whose brand name is shown on final products or a retailer that sells final products to end users. The actual management of each of the servers 60 and 90 may be carried out by a system vendor of the supply chain management system 100 in the same manner as distributing the company code.

The data management server 60 is a server device having a control circuit 60a that functions as a computer. The data management server 60 functions as an information processing device configured to process information related to the distributed item IMd. The control circuit 60a includes a processor 61, RAM 62, a storage unit 63, an input/output interface 64, and a bus connecting these elements to each other. The processor 61 is hardware coupled with the RAM 62 for arithmetic processing. The processor 61 is configured to access the RAM 62 to perform processes related to data management. The storage unit 63 stores, as supply chain management programs, a record generation program for accumulating the transaction records ReT and an information sharing program for sharing the undisclosed information NDi. The data management server 60 includes functional units such as a record acquisition unit 71, a verification processing unit 72, a chain generation unit 73, and a code providing unit 74 based on the record generation program. In addition, the supplier terminal device 10 includes functional units such as an information providing unit 81 and a data retrieving unit 82 based on the information sharing program.

The record acquisition unit 71 is configured to acquire, as the transaction record ReT, information transmitted from the supplier terminal device 10 (see S161). The transaction record ReT includes at least one item data and company data, and the concealed data SD from the undisclosed information NDi. The record acquisition unit 71 further acquires the time stamp data from the time stamp server 90 upon acquiring the transaction record ReT.

The verification processing unit 72 performs a data error detection process (see S162) to determine whether each data acquired by the record acquisition unit 71 is normal by comparing the acquired data with data that has been registered in advance. The verification processing unit 72 is configured to detect improper products, parts, raw materials MAT, and the like, which were introduced by non-certified vendors into the supply chain SC. The verification processing unit 72 determines whether the company data matches a true value that has been registered in a list, whether the item data overlaps with the item data already acquired from another supplier, and whether chronological order of the date information in association with the time stamp data is normal. When the verification processing unit 72 detects an abnormal value in at least one of the data which is a verification target, the verification processing unit 72 determines that there is a possibility that an unauthorized item is introduced. In this case, the value indicative of an error is transmitted to the supplier terminal device 10, for example. In contrast, if no abnormality is found in each data, the verification processing unit 72 makes a true determination that the intermediate item IMi is true.

The chain generation unit 73 uses blockchain technology to accumulate the item data, the company data, the time stamp data, the concealed data SD, and the like acquired by the record acquisition unit 71 with tamper resistance. The chain generation unit 73 treats the hash value of each data as one block BL, and performs a connecting process for connecting the block BL (see FIG. 5) to the end of the blockchain BC (see FIG. 5) (see S63).

The chain generation unit 73 calculates a hash value of the last block BL in the block chain BC, and uses this calculated hash value as new item data (see S64). As a result, the item data associated with the past transaction records ReT is generated. Further, the hash value calculated as item data is included into the header of the next block BL. As a result, each block BL stores the concealed data SD in association with each of the traders TR constituting the supply chain SC.

The chain generation unit 73 repeats calculation of hash values reflecting the distribution processes up to that point as the transactions of items between suppliers in the supply chain SC proceed. As a result, the hash value provided as item data is a value that reflects all distribution processes for the item so far. Then, when the distribution item IMd, which is the final product, is handed over to an end user, all the transaction records ReT accumulated regarding this distribution item IMd are stored in association with the item data using the blockchain BC. Once the information is stored in the blockchain BC, the information is available in public that can be referenced by at least the traders TR and end users which constitute the supply chain SC.

The chain generation unit 73 saves the transaction record ReT converted into the blockchain in the history database 79. The history database 79 is a storage area provided within the storage unit 63 . Accumulation of the transaction records ReT does not have to be performed only by the blockchain BC (i.e., a private chain) provided in the history database 79 . The chain generation unit 73 can store at least part of the transaction records ReT in a blockchain BC (i.e., a public chain) outside of the data management server 60 . The data management server 60 can use a public chain such as Ethereum, Bitcoin and NEM to store the transaction records ReT.

The code providing unit 74 provides the hash value of the final block BL calculated by the chain generation unit 73 to the supplier terminal device 10, which is a transmitting source of the transaction record ReT. The code supply unit 74 is configured to generate a two-dimensional code, as new item code QRi, containing at least the hash value. The code providing unit 74 transmits the image data of the item code QRi to the supplier terminal device 10 (see S65).

The information providing unit 81 responds to an inquiry from the particular terminal device 10s and provides the request communication unit 23 with information necessary for the particular terminal device 10s to collect the undisclosed information NDi. Specifically, the information providing unit 81 receives the item data (item ID) associated with the item and the identification information of the concealed data SD from the request communication unit 23. The information providing unit 81 transmits, to the request communication unit 23, ID information retrieved from the blockchain BC based on the item ID and the concealed data SD (a hash value) retrieved from the blockchain BC based on the identification information (See S66).

The data retrieving unit 82 extracts data to be provided to the request communication unit 23 from the blockchain BC. When the information providing unit 81 acquires the item ID, the data retrieving unit 82 selects the blockchain BC associated with the item ID, and generates ID information reflecting its chain structure. In addition, when the information providing unit 81 acquires the identification information, the data retrieving unit 82 identifies the block BL and the storage area indicated by the identification information, and reads the concealed data SD stored in the area. The data retrieving unit 82 provides the ID information and the concealed data SD to the information providing unit 81.

The data management server 60 described above enables an end user to refer to the transaction record ReT. Specifically, the end user reads, using a user terminal device such as a smartphone, the item code QRi (i.e., a distribution product code QRd) of the distribution item IMd distributed as the final product. Using the item data recorded in the distribution item code QRd as a key, the user terminal device can acquire the transaction record ReT, which is the history information of the distribution item IMd, from the data management server 60. The user terminal device can display the received transaction record ReT on a display or the like toward the end user.

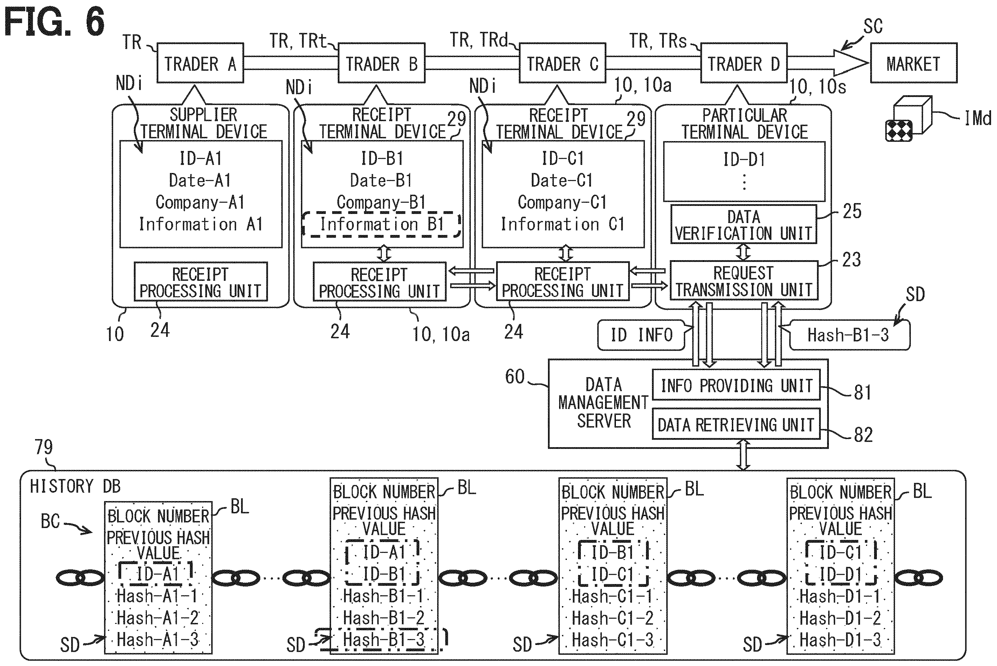

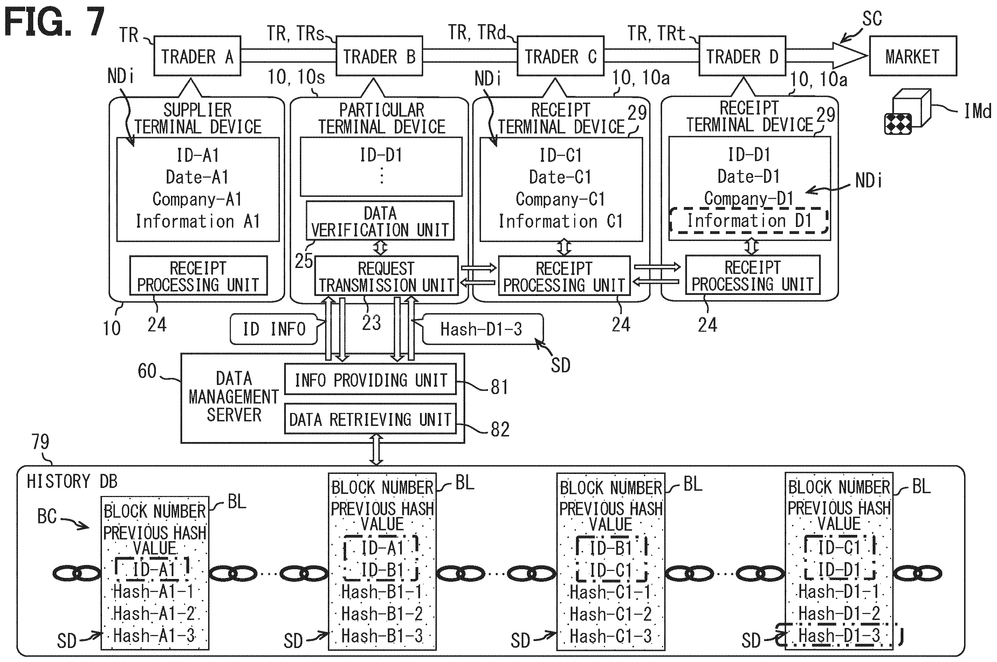

Next, a series of processes (see FIGS. 6 and 7) in which the undisclosed information NDi is provided from the managing trader TRt to the particular trader TRs through cooperation of a plurality of supplier terminal devices 10 respectively linked to each trader TR is explained. In the information providing process, a data acquisition process (see FIG. 8) is carried out by cooperation between a plurality of supplier terminal devices 10 and the data management server 60. The data acquisition process is triggered by, for example, an operator's input operation to the supplier terminal device 10 functioning as the particular terminal device 10s.

In the information providing process as shown in FIG. 6, the particular trader TRs (the trader D) located on a downstream side of the supply chain SO acquires the undisclosed information NDi from the managing trader TRt (the trader B) located on an upstream side of the supply chain SC. In the information providing process, for example, if a defect is found in the distribution item IMd, the undisclosed information NDi such as the raw materials MAT (see FIG. 1) or parts used in the distribution item IMd is traced, as a trace-back, from the downstream side of the supply chain SC to the upstream side of the supply chain SC. The undisclosed information NDi acquired by the trace-back is utilized for investigating the cause of the found defect, curing the defect, and the like.

The particular terminal device 10s linked to the specific trader TRs sets an item ID of the distribution item for which the undisclosed information NDi is required and the search information to specify the undisclosed information NDi (see S111). The item ID and the search information are set based on information provided, by, e.g., an input from a worker, to the particular terminal device 10s from an outside. The request communication unit 23 requests the data management server 60 to provide ID information together with the item ID (see S112).

When the information providing unit 81 acquires the providing request for the ID information, the data management server 60 identifies the blockchain BC linked to the item ID in the data retrieving unit 82 based on the item ID belonging to the providing request. The data retrieving unit 82 acquires the ID information based on the identified chain structure of the blockchain BC (see S161). As an example, the data retrieving unit 82 retrieves the company IDs (see the one-dot chain line in FIG. 6) from each block BL of the blockchain BC linked to the item ID, and generates the ID information from the connection of these company IDs. The information providing unit 81 transmits the ID information acquired by the data retrieving unit 82 to the request communication unit 23 of the particular terminal device 10s (see S162).

The request communication unit 23 of the particular terminal device 10s sets the transmission target for the providing request based on the ID information provided from the information providing unit 81 (see S113). In the case of trace-back, it is presumed that the managing trader TRt which stores the required undisclosed information NDi is located on a downstream side of the supply chain SC with respect to the particular trader TRs. Therefore, the request communication unit 23 refers to the ID information and sets, as the transmission target for the providing request, the receipt terminal device 10a linked to the direct trader TRd (the trader C in FIG. 6) located on a downstream side of the supply chain. The request communication unit 23 transmits the providing request and the search information to the receipt processing unit 24 of the receipt terminal device 10a set as the transmission target (see S114).

The receipt terminal device 10a associated with the direct trader TRd receives the providing request at the receipt processing unit 24 . The receipt processing unit 24 refers to the stored data of the supplier database 29 based on the search information received together with the providing request, and determines whether the undisclosed information NDi specified by the providing request is stored in the supplier database 29 of the host terminal device. (see S115).

If the undisclosed information NDi specified by the providing request exists in the stored data, the receipt processing unit 24 selects the undisclosed information NDi as providing data for the particular terminal device 10s (see S116). The receipt processing unit 24 confirms the intention of providing data with an administrator that stores the undisclosed information NDi. When providing the undisclosed information NDi is approved based on the administrator's input operation or a predetermined setting, the providing data is determined to be returned. The providing data is returned to the request communication unit 23 together with identification information for searching, in the blockchain BC, for the concealed data SD corresponding to the undisclosed information NDi to be provided (see S121). Note that if providing of the undisclosed information NDi is denied, a notification of denial of providing is returned to the request communication unit 23.

In contrast, if the undisclosed information NDi specified by the providing request does not exist in the stored data, and if the cooperation with the data providing of the undisclosed information NDi is approved, the receipt processing unit 24 sets a transfer target for the providing request (see S117). In case of a trace-back, since the receipt processing unit 24 has received the providing request from the post-process side (i.e., a downstream side of the supply chain), the receipt terminal device 10a of the trader TR (Fig. 6 trader B ) on the pre-process side (i.e., an upstream side of the supply chain) is set as the transfer target for the providing request based on the ID information. The receipt processing unit 24 transmits (transfers) the providing request and the search information to the receipt terminal device 10a set as the transfer target (see S118). In each receipt terminal device 10a, if the undisclosed information NDi is not stored, the receipt processing unit 24 repeats transfer of the providing request to the next receipt terminal device 10a. The transfer of the providing request is repeated based on, e.g., the ID information until no receipt terminal device 10a (trader TR) exists on the upstream side of the supply chain.

When the receipt processing unit 24 receives the providing request transferred from the other receipt unit 24, the receipt processing unit 24 refers to the stored data and confirms whether the undisclosed information NDi specified by the providing request exists. In the receipt terminal device 10a associated with the managing trader TRt (trader B in FIG. 6), the supplier database 29 is searched for the undisclosed information NDi specified by the providing request. The receipt processing unit 24 selects the undisclosed information NDi (FIG. 6 Information B1, see broken line) (see S119).

The receipt processing unit 24 returns the selected providing data together with the identification information to the downstream-side receipt processing unit 24 (see S120). If the providing request has been transferred by one or more of receipt processing units 24, the providing data and the like is transmitted along the reply route via the receipt processing units 24 that forwarded the providing request in a reverse direction of the transmission route of the providing request (see S120 and S121). The request communication unit 23 of the particular terminal device 10s acquires the required undisclosed information NDi by receiving the providing data and the like from the receipt processing unit 24 that first transmitted the providing request to another receipt processing unit 24 among the receipt processing units (see S122).

The information providing process shown in FIG. 7 shows a situation where the particular trader TRs (trader B) located on an upstream side of the supply chain SC acquires the undisclosed information NDi from the managing trader TRt located on a downstream side of the supply chain SC. In this information providing process, when a defect is found in a shipping item of the particular trader TRs, for example, the undisclosed information NDi that identifies the distribution item IMd in which the shipping item is used is acquired from a downstream side of the supply chain SC, i.e., trace-forward tracking. The undisclosed information NDi acquired by the trace-forward is utilized for collecting the distribution items IMd on the market.

In the information providing process by the trace-forward, the request communication unit 23 of the particular terminal device 10s associated with the specific trader TRs sets the item ID and the search information (see S111), and requests the data management server 60 to provide the ID information (see S112). When the information providing unit 81 of the data management server 60 acquires the providing request for the ID information, the information providing unit 81 acquires the ID information from the blockchain in cooperation with the data retrieving unit 82 (see S161). The ID information in this case is also generated from the connection of the company IDs (see the one-dot chain line in FIG. 7), and has contents such as "ID-A1->ID-B1->ID-C1->ID-D1 ", for example. The information providing unit 81 returns the acquired ID information to the request communication unit 23 (see S162).

The request communication unit 23 refers to the ID information and sets the receipt terminal device 10a associated with the direct trader TRd (Fig. 7 trader C) located on a downstream side of the supply chain SC as the transmission target for the providing request (see S113). The request communication unit 23 transmits the providing request and the search information to the receipt processing unit 24 of the receipt terminal device 10a set as the transmission target (see S114).

The receipt processing unit 24 of the receipt terminal device 10a, which has received the providing request, asks a worker who belongs to the holder (the trader TR) that holds the undisclosed information NDi for a decision as to whether to approve or disapprove the request for providing information. If the providing request is approved by the holder, the receipt processing unit 24 determines, based on the search information, whether the undisclosed information NDi specified by the providing request is stored in the supplier database 29 (see S115). When the undisclosed information NDi complying with the providing request is found in the supplier database 29, the undisclosed information NDi is selected as the providing data (see S116). This providing data is returned to the request communication unit 23 together with the identification information (see S121). It should be noted that, when the providing request is denied by the administrator, denial information is returned to the particular terminal device 10s.

On the contrary, if the undisclosed information NDi specified by the providing request is not found in the supplier database 29, the receipt processing unit 24 sets the transmission target for the providing request (see S117). For the trace-forward, the receipt processing unit 24 receives the providing request from the upstream side in the supply chain. Therefore, the receipt terminal device 10a of the downstream-side trader TR (Fig. 7 trader D) is set as the transmission target for the request based on the ID information, and the providing request and the search information are transmitted to the set receipt terminal device 10a (see S118).

In the receipt terminal device 10a associated with the managing trader TRt (trader D in FIG. 7), the supplier database 29 is searched for the undisclosed information NDi specified by the providing request. The receipt processing unit 24 returns the retrieved undisclosed information NDi (FIG. 7 Information D1, see the broken line) to the upstream-side receipt processing unit 24 together with the identification information (see S120). The providing data and the identification information are transmitted to the upstream side through the return path via the receipt processing unit 24 and are returned to the request communication unit 23 (see S121). The request communication unit 23 acquires the required undisclosed information NDi by receiving the providing data from the receipt processing unit 24 (see S122).

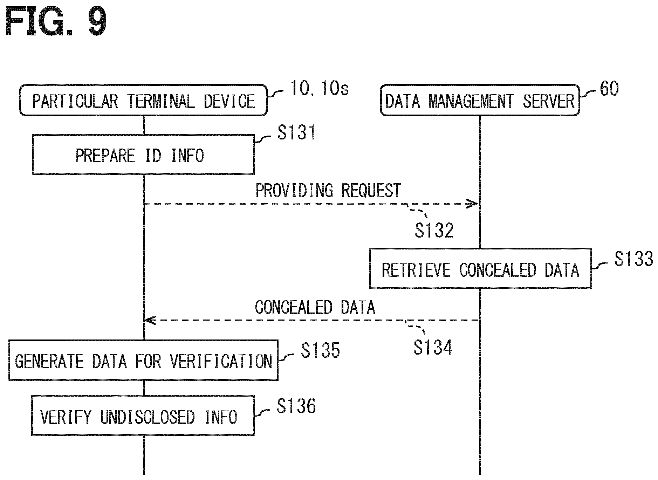

When the undisclosed information NDi is provided to the particular terminal device 10s through the above process, the request communication unit 23 starts a data verification process (see FIG. 9). The data verification process is performed with cooperation between the particular terminal device 10s and the data management server 60.

The request communication unit 23 of the particular terminal device 10s prepares the acquired identification information together with the undisclosed information NDi (see S131). The request communication unit 23 transmits the providing request for the concealed data SD to the data management server 60 together with the prepared identification information (see S132).

When the data management server 60 acquires the providing request for the concealed data SD at the information providing unit 81, the data retrieving unit 82 retrieves the concealed data SD (see S133). The data retrieving unit 82 selects again the blockchain BC with reference to the ID information, and searches, based on the identification information, the specified block chain BC for the concealed data SD that is a providing target. In the above-described information by the trace-back, the concealed data SD called "Hash-B1-3" (see the two-dot chain line in FIG. 6) is sought. On the contrary, in the above-described information providing by the trace-forward, the concealed data SD called "Hash-D1-3" (see the two-dot chain line in FIG. 7) is sought. The information providing unit 81 transmits the concealed data SD acquired by the data retrieving unit 82 to the request communication unit 23 of the particular terminal device 10s (see S134).

The data verification unit 25 of the supplier terminal device 10 cooperates with the concealing unit 22 (see FIG. 2) to calculate a hash value using the undisclosed information NDi acquired by the request communication unit 23 as input information (see S135). In the above example of the information providing, hash values corresponding to "Hash-B1-3'" and "Hash-D1-3'" are calculated. The data verification unit 25 uses the calculated hash values as verification data. The data verification unit 25 compares the hash value of the verification data with the hash value of the concealed data SD provided from the information providing unit 81 to the request communication unit 23. The data verification unit 25 verifies whether the undisclosed information NDi has been tampered with based on a determination of whether the two hash values match each other (see S136). As a result of the above verification, if the undisclosed information NDi has not been tampered with, the exemplary information providing process is completed.

In the present embodiment as described above, if the receipt terminal device 10a that has received the providing request does not store the undisclosed information NDi, the providing request is transferred to another receipt terminal device 10a. Therefore, even if the particular terminal device 10s does not recognize the receipt terminal device 10a that stores the undisclosed information NDi, the providing request transmitted from the particular terminal device 10s can eventually reach the receipt terminal device 10a that stores the undisclosed information NDi. Then, when the providing request arrives at the receipt terminal device 10a that stores the undisclosed information NDi, the undisclosed information NDi is returned to the particular terminal device 10s via the return route that is along the transmission route for the providing request in an opposite direction (i.e., a reverse direction).

According to the above-described process, even if the undisclosed information NDi that must be kept confidential is managed individually by the respective trader TR, the particular trader TRs can obtain the necessary undisclosed information NDi via the direct trader TRd with which the particular.trader TRs has a direct business relationship. Furthermore, by tracing the traders TR that have processed the providing request in order, the entire return route for the undisclosed information NDi can be kept confidential from each trader TR. That is, transaction information between traders TR such as a trade secret is not known to other traders TR even if the providing request is transferred. In addition, since the concealed data SD is managed in a state where each trader TR can refer to the concealed data SD, the particular trader TRs can verify the acquired undisclosed information NDi using the concealed data SD that is very less likely to be falsified.

Therefore, it is possible to ensure usability of information related to the supply chain SC while reducing the risk of falsification and ensuring non-disclosure of trade secrets and the like.

In addition, in the supply chain management system 100 according to this embodiment, the concealed data SD generated based on trade secrets or the like is treated using the blockchain BC. In addition, the undisclosed information NDi, which is the original (raw information) of the concealed data SD, is stored in the supplier database 29 of each trader TR. Furthermore, when a disclosing request for undisclosed information NDi is received from another trader TR, an inquiry can be made to the data holder (the managing trader TRt) that manages the undisclosed information NDi. Then, when approval by the data holder is acquired, the undisclosed information NDi can be acquired. In addition, it is possible to confirm whether data of the received undisclosed information NDi has been tampered with.

The undisclosed information NDi cannot be put into the block BL as it is because that information NDi would be shared by all traders TR. Thus, according to the above-described embodiment, such a problem can be solved using a blockchain BC that manages information with hash values. Furthermore, the concealed data SD managed by the blockchain BC (i.e., a distributed ledger) can be used for verification, which would not realize from a system where the original data of the undisclosed information ND is stored by the supplier database 29 of each trader TR. Therefore, credibility of the undisclosed information NDi individually managed by each trader TR can be guaranteed.

In addition, in this embodiment, each trader TR classifies the undisclosed information NDi into a plurality of items in advance. Then, each supplier terminal device 10 converts each of the plurality of classified items of the undisclosed information NDi into the concealed data SD. As described above, the concealed data SD classified into a plurality of items is generated for each trader TR, and the plurality of items of the concealed data SD for each trader TR are managed by the blockchain BC.

As described above, according to the method for generating the concealed data SD, the receipt terminal device 10a associated with the managing trader TRt can select, as a reply target for the particular terminal device 10s, only one or more pieces of the undisclosed information NDi that comply with the providing request among from the plurality of categorized pieces of the undisclosed information NDi. Therefore, information disclosure from the managing trader TRt to the particular trader TRs can be performed within a minimum necessary range.

As described above, by dividing the undisclosed information NDi and the concealed data SD into a plurality of categories assuming that the undisclosed information NDi and the concealed data SD will be disclosed to other traders TR, a barrier to disclosing the undisclosed information NDi between each transactor TR can be lowered. As a result, usability of information related to the supply chain SC can be ensured.

Further, the particular terminal device 10s in this embodiment generates verification data by applying the returned undisclosed information NDi to the concealing process used to generate the concealed data SD. Furthermore, the particular terminal device 10s can verify the acquired undisclosed information NDi by comparing the concealed data SD managed by the blockchain BC with verification data generated from the undisclosed information NDi. According to the above, the particular terminal device 10s can verify, with high certainty, whether the received undisclosed information NDi has been tampered with.

Furthermore, the particular terminal device 10s of the present embodiment estimates whether the managing trader TRt that manages the undisclosed information NDi belongs to upstream side traders or downstream side traders. Based on the estimation result, the particular terminal device 10s transmits a providing request to the receipt terminal device 10a of the direct trader located on the upstream side or the downstream side in the supply chain. As described above, the supply chain management system 100 enables inquiries both in the upstream direction and the downstream direction in the supply chain SC. As a result, each trader TR can receive information widely from other traders TR within the supply chain SC without being restricted only to one direction of distribution items in the supply chain SC.

Furthermore, if a providing request is received from the downstream side in the supply chain, the receipt terminal device 10a of the present embodiment transfers the providing request to the receipt terminal device 10a of the trader TR on the upstream side of the supply chain. On the contrary, if a providing request is received from the upstream side in the supply chain, the receipt terminal device 10a transfers the providing request to the receipt terminal device 10a of the trader TR on the downstream side of the supply chain. According to the above, transfer of the providing request via the plurality of receipt terminal devices 10a is efficiently performed. As a result, it is possible to increase the certainty and speed with which the providing request reaches the receipt terminal device 10a of the managing trader TRt, thereby further improving the convenience of obtaining information based on the providing request.

In the above embodiment, the supplier terminal device 10 corresponds to a "computer", and the undisclosed information NDi corresponds to "pre-concealed data". Furthermore, the supply chain management program corresponds to an "information management program".

Specifically, the supply chain management system 100 can manage not only the places of origins of cathode materials such as cobalt, nickel, lithium, manganese, and aluminum, but also environmental, health and safety performance, and the like. Furthermore, the supply chain management system 100 can manage the total amount of carbon footprint (i.e., carbon dioxide emissions) emitted during manufacturing and distributing processes of the batteries.

In Modification 2 to the above-described embodiment, the process of classifying the undisclosed information NDi into a plurality of items at each supplier terminal device 10 is eliminated. As a result, the undisclosed information NDi of each trader TR is registered as single concealed data SD in the blockchain BC. As described above, the process of classifying the undisclosed information NDi and the concealed data SD for each item can be omitted.

In Modification 3 to the above embodiment, the data verification process is performed by the data management server 60. Specifically, the request communication unit 23 provides the acquired undisclosed information NDi and the identification information to the data management server 60, and acquires, from the data management server 60, the determination result of whether falsification occurs.

In Modification 4 to the above-described embodiment, a request for providing information is limited to a request in one direction from the upstream side to the downstream side of the supply chain SC. In Modification 5 to the above-described embodiment, a request for providing information is limited to a request in one direction from the downstream side to the upstream side of the supply chain SC. As in Modifications 4 and 5 above, bidirectional requests in the supply chain SC may not necessarily be required.

In Modification 6 to the above embodiment, some of the supplier terminals 10 may not issue a new item code QRi. As a result, one item code QRi goes through a plurality of traders TR with the intermediate item IMi to which the one item code QRi is attached. Also in Modification 6, each trader TR uploads the distribution record from the supplier terminal device 10 to the data management server 60. Therefore, the process of requesting for information providing from other supplier terminal devices 10 using the item ID as a key can also be executed in the same manner as in the above-described embodiment.

In Modification 7 to the above-described embodiment, the item data is attached to the intermediate item IMi using RFID (radio frequency identifier) technique. In Modification 7, an RFID tag is used as a data recording medium attached to the intermediate item IMi instead of a paper medium on which the two-dimensional code is printed. By using RFID technology, the item data can be read remotely even in a situation where the RFID tag is not visible, for example. In Modification 7, instead of the scanner 17, a reader or the like capable of reading RFID tags is connected to the supplier terminal device 10 by wire or wirelessly.

The data management server 60 and the timestamp server 90 may be physically managed by the manager of the supply chain SC or the system supplier in an on-premises manner. The data management server 60 and the timestamp server 90 may be provided in the cloud to be used by the manager of the supply chain SC or the system supplier.

In the above embodiment and modifications, the respective functions provided by the data management server 60 can be also provided by software and hardware for executing the software, only software, only hardware, and combinations of software and hardware. Similarly, each function provided by the supplier terminal device 10 can also be provided by software and hardware for executing the software, only software, only hardware, or a multiple combination of them. In cases where these functions are provided by electronic circuits as hardware, the respective functions can be also provided by analog circuits or digital circuits which include a large number of logic circuits.

In the aforementioned embodiments, the respective processers may include at least one operational core, such as a CPU (Central Processing Unit) or a GPU (Graphics Processing Unit). The processor may further include a field-programmable gate array (FPGA) and an IP core having other dedicated functions.

The form of the storage medium (non-transitory tangible storage medium) employed as each storage part of the above embodiment and storing each program related to the information management method of the present disclosure may be changed as appropriate. For example, the storage medium is not limited to the configuration provided on the circuit board, and may be provided in the form of a memory card or the like. The storage medium may be inserted into a slot portion, and electrically connected to the computer bus. The storage medium may be also constituted by an optical disk which forms a source of programs to be copied into a computer, a hard disk drive therefor, and the like.

The control unit and the method thereof which have been described in the present disclosure may be also implemented by a special purpose computer which includes a processor programmed to execute one or more functions implemented by computer programs. Alternatively, the control unit and the control method described in the present disclosure may be implemented by a special purpose hardware logic circuit. Alternatively, the control unit and the control method described in the present disclosure may be implemented by one or more special purpose computers configured by a combination of a processor executing a computer program and one or more hardware logic circuits. The computer program may be stored, as instructions to be executed by a computer, in a tangible non-transitory computer-readable medium.

## Claims

1. An information management method for managing concealed data (SD) in association with each of a plurality of traders (TR) that form a supply chain (SC), the concealed data being managed using a blockchain (BC) to which the plurality of traders are able to refer, the method comprising the steps of:
transmitting (S114), with a particular terminal device (10s) in association with a particular trader (TRs), a providing request for pre-concealed data in a transmission direction of a transmission route to a receipt terminal device (10a) in association with a direct trader (TRd) that has a business relationship with the particular trader in the supply chain;
if the receipt terminal device of the direct trader (TRd) that has received the providing request does not store the pre-concealed data, transferring (S117, S118), with the receipt terminal device of the direct trader (TRd), the providing request in the transmission direction of the transmission route to the receipt terminal device of another trader that has a business relationship with the direct trader in the supply chain;
if the receipt terminal device of the direct trader (TRd) that has received the providing request stores the pre-concealed data, returning (S120, S121), with the receipt terminal device of the direct trader (TRd), the pre-concealed data in a reply direction of the transmission route opposite to the transmission direction to the particular terminal device; and
if the receipt terminal device of the other trader that has received the providing request from the receipt terminal device of the direct trader stores the pre-concealed data, providing, with the receipt terminal device of the other trader, the pre-concealed data to the particular terminal device in the reply direction of the transmission route.

2. The information management method according to claim 1, wherein
a plurality of pieces of the concealed data generated from a plurality of categorized pieces of the pre-concealed data for each of the plurality of traders are managed using the blockchain, and
the step of returning the pre-concealed data includes selecting, as a reply target for the particular terminal device, one or more of the plurality of categorized pieces of the pre-concealed data complying with the providing request among from the plurality of categorized pieces of the pre-concealed data.

3. The information management method according to claim 1 or 2, further comprising:
generating (S135) verification data based on the pre-concealed data by applying the pre-concealed data that is returned to the particular terminal device to a concealing process used for generating the concealed data; and
verifying (S136) the acquired pre-concealed data by comparing the concealed data managed by the blockchain with the verification data generated from the pre-concealed data.

4. The information management method according to any one of claims 1 to 3, further comprising the step of:
estimating (S113) whether a managing trader that manages the pre-concealed data belongs to upstream-side traders that are located on an upstream side of the particular trader in the supply chain or downstream-side traders that are located on a downstream side of the particular trader in the supply chain, wherein
the step of transmitting the providing request further includes:
transmitting the providing request to the receipt terminal device of the direct trader located on an upstream side of the particular trader in the supply chain upon estimating that the managing trader belongs to the upstream-side traders; and
transmitting the providing request to the receipt terminal device of the direct trader on a downstream side of the particular trader upon estimating that the managing trader belongs to the downstream-side traders.

5. The information management method according to claim 4, wherein
the step of transmitting the providing request further includes:
when the providing request is received from the downstream side in the supply chain, transferring the providing request to the receipt terminal device of the trader on the upstream side in the supply chain; and
when the providing request is received from the upstream side in the supply chain, transferring the providing request to the receipt terminal device of the trader on the downstream side in the supply chain.

6. An information management program for managing concealed data (SD) in association with each of a plurality of traders (TR) that form a supply chain (SC), the concealed data being managed using a blockchain (BC) to which the plurality of traders are able to refer, the program causing the at least one processor to:
transmitting (S114), with a particular terminal device (10s) in association with a particular trader (TRs), a providing request for pre-concealed data in a transmission direction of a transmission route to a receipt terminal device (10a) in association with a direct trader (TRd) that has a business relationship with the particular trader in the supply chain;
if the receipt terminal device of the direct trader (TRd) that has received the providing request does not store the pre-concealed data, transferring (S117, S118) , with the receipt terminal device of the direct trader (TRd), the providing request in the transmission direction of the transmission route to the receipt terminal device of another trader that has a business relationship with the direct trader in the supply chain;
if the receipt terminal device of the direct trader (TRd) that has received the providing request stores the pre-concealed data, returning (S120, S121) , with the receipt terminal device of the direct trader (TRd), the pre-concealed data in a reply direction of the transmission route opposite to the transmission direction to the particular terminal device; and
if the receipt terminal device of the other trader that has received the providing request from the receipt terminal device of the direct trader stores the pre-concealed data, providing, with the receipt terminal device of the other trader, the pre-concealed data to the particular terminal device in the reply direction of the transmission route.

## Patentansprüche

1. Informationsverwaltungsverfahren zum Verwalten verborgener Daten (SD) in Verknüpfung mit jedem von mehreren Händlern (TR), die eine Lieferkette (SC) bilden, wobei die verborgenen Daten unter Verwendung einer Blockchain (BC) verwaltet werden, auf die sich die mehreren Händler beziehen können, wobei das Verfahren die folgenden Schritte umfasst
Übertragen (S114), mit einer bestimmten Endgerätvorrichtung (10s) in Verknüpfung mit einem bestimmten Händler (TRs), einer Bereitstellungsanforderung für vorverborgene Daten in einer Übertragungsrichtung einer Übertragungsroute an eine Empfangsendgerätvorrichtung (10a) in Verknüpfung mit einem Direkthändler (TRd), der eine Geschäftsbeziehung mit dem bestimmten Händler in der Lieferkette hat;
wenn die Empfangsendgerätvorrichtung des Direkthändlers (TRd), der die Bereitstellungsanforderung empfangen hat, die vorverborgenen Daten nicht speichert, Übertragen (S117, S118), mit der Empfangsendgerätvorrichtung des Direkthändlers (TRd), der Bereitstellungsanforderung in der Übertragungsrichtung der Übertragungsroute an die Empfangsendgerätvorrichtung eines anderen Händlers, der eine Geschäftsbeziehung mit dem Direkthändler in der Lieferkette hat;
wenn die Empfangsendgerätvorrichtung des Direkthändlers (TRd), der die Bereitstellungsanforderung empfangen hat, die vorverborgenen Daten speichert, Zurückgeben (S120, S121), mit der Empfangsendgerätvorrichtung des Direkthändlers (TRd), der vorverborgenen Daten in einer Antwortrichtung der Übertragungsroute entgegengesetzt zu der Übertragungsrichtung an die bestimmte Endgerätvorrichtung; und
wenn die Empfangsendgerätvorrichtung des anderen Händlers, der die Bereitstellungsanforderung von der Empfangsendgerätvorrichtung des Direkthändlers empfangen hat, die vorverborgenen Daten speichert, Bereitstellen, mit der Empfangsendgerätvorrichtung des anderen Händlers, der vorverborgenen Daten an die bestimmte Endgerätvorrichtung in der Antwortrichtung der Übertragungsroute.

2. Informationsverwaltungsverfahren gemäß Anspruch 1, wobei
mehrere Teile der verborgenen Daten, die aus mehreren kategorisierten Teilen der vorverborgenen Daten für jeden der mehreren Händler erzeugt werden, unter Verwendung der Blockchain verwaltet werden, und
der Schritt des Zurückgebens der vorverborgenen Daten Auswählen, als ein Antwortziel für die bestimmte Endgerätvorrichtung, eines oder mehrerer der mehreren kategorisierten Teile der vorverborgenen Daten, die der Bereitstellungsanforderung entsprechen, aus den mehreren kategorisierten Teilen der vorverborgenen Daten beinhaltet.

3. Informationsverwaltungsverfahren gemäß Anspruch 1 oder 2, ferner umfassend:
Erzeugen (S135) von Verifikationsdaten basierend auf den vorverborgenen Daten durch Anwenden der vorverborgenen Daten, die an die bestimmte Endgerätvorrichtung zurückgegeben werden, auf eine Verbergungsverarbeitung, die zum Erzeugen der verborgenen Daten verwendet wird; und
Verifizieren (S136) der erlangten vorverborgenen Daten durch Vergleichen der verborgenen Daten, die durch die Blockchain verwaltet werden, mit den Verifikationsdaten, die aus den vorverborgenen Daten erzeugt werden.

4. Informationsverwaltungsverfahren gemäß einem der Ansprüche 1 bis 3, ferner umfassend den folgenden Schritt:
Schätzen (S113), ob ein verwaltender Händler, der die vorverborgenen Daten verwaltet, zu vorgelagerten Händlern, die sich auf einer vorgelagerten Seite des bestimmten Händlers in der Lieferkette befinden, oder zu nachgelagerten Händlern, die sich auf einer nachgelagerten Seite des bestimmten Händlers in der Lieferkette befinden, gehört, wobei der Schritt des Übertragens der Bereitstellungsanforderung ferner beinhaltet:
Übertragen der Bereitstellungsanforderung an die Empfangsendgerätvorrichtung des Direkthändlers, der sich auf einer vorgelagerten Seite des bestimmten Händlers in der Lieferkette befindet, nach Schätzen, dass der verwaltende Händler zu den vorgelagerten Händlern gehört; und
Übertragen der Bereitstellungsanforderung an die Empfangsendgerätvorrichtung des Direkthändlers auf einer nachgelagerten Seite des bestimmten Händlers nach Schätzen, dass der verwaltende Händler zu den nachgelagerten Händlern gehört.

5. Informationsverwaltungsverfahren gemäß Anspruch 4, wobei der Schritt des Übertragens der Bereitstellungsanforderung ferner beinhaltet:
wenn die Bereitstellungsanforderung von der nachgelagerten Seite in der Lieferkette empfangen wird, Übertragen der Bereitstellungsanforderung an die Empfangsendgerätvorrichtung des Händlers auf der vorgelagerten Seite in der Lieferkette; und
wenn die Bereitstellungsanforderung von der vorgelagerten Seite in der Lieferkette empfangen wird, Übertragen der Bereitstellungsanforderung an die Empfangsendgerätvorrichtung des Händlers auf der nachgelagerten Seite in der Lieferkette.

6. Informationsverwaltungsprogramm zum Verwalten verborgener Daten (SD) in Verknüpfung mit jedem von mehreren Händlern (TR), die eine Lieferkette (SC) bilden, wobei die verborgenen Daten unter Verwendung einer Blockchain (BC) verwaltet werden, auf die sich die mehreren Händler beziehen können, wobei das Programm den mindestens einen Prozessor zu Folgendem veranlasst:
Übertragen (S114), mit einer bestimmten Endgerätvorrichtung (10s) in Verknüpfung mit einem bestimmten Händler (TRs), einer Bereitstellungsanforderung für vorverborgene Daten in einer Übertragungsrichtung einer Übertragungsroute an eine Empfangsendgerätvorrichtung (10a) in Verknüpfung mit einem Direkthändler (TRd), der eine Geschäftsbeziehung mit dem bestimmten Händler in der Lieferkette hat;
wenn die Empfangsendgerätvorrichtung des Direkthändlers (TRd), der die Bereitstellungsanforderung empfangen hat, die vorverborgenen Daten nicht speichert, Übertragen (S117, S118), mit der Empfangsendgerätvorrichtung des Direkthändlers (TRd), der Bereitstellungsanforderung in der Übertragungsrichtung der Übertragungsroute an die Empfangsendgerätvorrichtung eines anderen Händlers, der eine Geschäftsbeziehung mit dem Direkthändler in der Lieferkette hat;
wenn die Empfangsendgerätvorrichtung des Direkthändlers (TRd), der die Bereitstellungsanforderung empfangen hat, die vorverborgenen Daten speichert, Zurückgeben (S120, S121), mit der Empfangsendgerätvorrichtung des Direkthändlers (TRd), der vorverborgenen Daten in einer Antwortrichtung der Übertragungsroute entgegengesetzt zu der Übertragungsrichtung an die bestimmte Endgerätvorrichtung; und
wenn die Empfangsendgerätvorrichtung des anderen Händlers, der die Bereitstellungsanforderung von der Empfangsendgerätvorrichtung des Direkthändlers empfangen hat, die vorverborgenen Daten speichert, Bereitstellen, mit der Empfangsendgerätvorrichtung des anderen Händlers, der vorverborgenen Daten an die bestimmte Endgerätvorrichtung in der Antwortrichtung der Übertragungsroute.

## Revendications

1. Procédé de gestion d'informations pour la gestion de données cachées (SD) en association avec chacun d'une pluralité de commerçants (TR) qui forment une chaîne d'approvisionnement (SC), les données cachées étant gérées à l'aide d'une chaîne de blocs (BC) à laquelle la pluralité de commerçants peuvent se référer, le procédé comprenant les étapes consistant à :
transmettre (S114), avec un dispositif terminal particulier (10s) en association avec un commerçant particulier (TRs), une demande de fourniture de données pré-cachées dans une direction de transmission d'un itinéraire de transmission vers un dispositif terminal de réception (10a) en association avec un commerçant direct (TRd) qui a une relation commerciale avec le commerçant particulier dans la chaîne d'approvisionnement ;
si le dispositif terminal de réception du commerçant direct (TRd) qui a reçu la demande de fourniture ne stocke pas les données pré-cachées, transférer (S117, S118), avec le dispositif terminal de réception du commerçant direct (TRd), la demande de fourniture dans la direction de transmission de l'itinéraire de transmission vers le dispositif terminal de réception d'un autre commerçant qui a une relation commerciale avec le commerçant direct dans la chaîne d'approvisionnement ;
si le dispositif terminal de réception du commerçant direct (TRd) qui a reçu la demande de fourniture stocke les données pré-cachées, renvoyer (5120, S121), avec le dispositif terminal de réception du commerçant direct (TRd), les données pré-cachées dans une direction de réponse de l'itinéraire de transmission opposée à la direction de transmission vers le dispositif terminal particulier ; et
si le dispositif terminal de réception de l'autre commerçant qui a reçu la demande de fourniture du dispositif terminal de réception du commerçant direct stocke les données pré-cachées, fournir, avec le dispositif terminal de réception de l'autre commerçant, les données pré-cachées au dispositif terminal particulier dans la direction de réponse de l'itinéraire de transmission.

2. Procédé de gestion d'informations selon la revendication 1, dans lequel
une pluralité d'éléments des données cachées générés à partir d'une pluralité d'éléments catégorisés des données pré-cachées pour chacun de la pluralité de commerçants sont gérés à l'aide de la chaîne de blocs, et
l'étape consistant à renvoyer les données pré-cachées inclut la sélection, comme cible de réponse pour le dispositif terminal particulier, d'un ou de plusieurs de la pluralité d'éléments catégorisés des données pré-cachées conformes à la demande de fourniture parmi la pluralité d'éléments catégorisés des données pré-cachées.

3. Procédé de gestion d'informations selon la revendication 1 ou 2, comprenant en outre :
la génération (S135) de données de vérification sur la base des données pré-cachées en appliquant les données pré-cachées qui sont renvoyées au dispositif terminal particulier à un processus de dissimulation utilisé pour générer les données cachées ; et
la vérification (S136) des données pré-cachées acquises en comparant les données cachées gérées par la chaîne de blocs avec les données de vérification générées à partir des données pré-cachées.

4. Procédé de gestion d'informations selon l'une quelconque des revendications 1 à 3, comprenant en outre l'étape consistant à :
estimer (S113) si un commerçant gestionnaire qui gère les données pré-cachées appartient aux commerçants en amont qui sont situés en amont du commerçant particulier dans la chaîne d'approvisionnement, ou aux commerçants en aval qui sont situés en aval du commerçant particulier dans la chaîne d'approvisionnement, dans lequel
l'étape consistant à transmettre la demande de fourniture inclut en outre :
la transmission de la demande de fourniture au dispositif terminal de réception du commerçant direct situé en amont du commerçant particulier dans la chaîne d'approvisionnement, après avoir estimé que le commerçant gestionnaire appartient aux commerçants en amont ; et
la transmission de la demande de fourniture au dispositif terminal de réception du commerçant direct situé en aval du commerçant particulier, après avoir estimé que le commerçant gestionnaire appartient aux commerçants en aval.

5. Procédé de gestion d'informations selon la revendication 4, dans lequel
l'étape consistant à transmettre la demande de fourniture inclut en outre :
lorsque la demande de fourniture est reçue en aval de la chaîne d'approvisionnement, le transfert de la demande de fourniture au dispositif terminal de réception du commerçant en amont de la chaîne d'approvisionnement ; et
lorsque la demande de fourniture est reçue en amont de la chaîne d'approvisionnement, le transfert de la demande de fourniture au dispositif terminal de réception du commerçant en aval de la chaîne d'approvisionnement.

6. Programme de gestion d'informations pour la gestion de données cachées (SD) en association avec chacun d'une pluralité de commerçants (TR) qui forment une chaîne d'approvisionnement (SC), les données cachées étant gérées à l'aide d'une chaîne de blocs (BC) à laquelle la pluralité de commerçants peuvent se référer, le programme amenant le au moins un processeur à :
transmettre (S114), avec un dispositif terminal particulier (10s) en association avec un commerçant particulier (TRs), une demande de fourniture de données pré-cachées dans une direction de transmission d'un itinéraire de transmission vers un dispositif terminal de réception (10a) en association avec un commerçant direct (TRd) qui a une relation commerciale avec le commerçant particulier dans la chaîne d'approvisionnement ;
si le dispositif terminal de réception du commerçant direct (TRd) qui a reçu la demande de fourniture ne stocke pas les données pré-cachées, transférer (S117, S118), avec le dispositif terminal de réception du commerçant direct (TRd), la demande de fourniture dans la direction de transmission de l'itinéraire de transmission vers le dispositif terminal de réception d'un autre commerçant qui a une relation commerciale avec le commerçant direct dans la chaîne d'approvisionnement ;
si le dispositif terminal de réception du commerçant direct (TRd) qui a reçu la demande de fourniture stocke les données pré-cachées, renvoyer (5120, S121), avec le dispositif terminal de réception du commerçant direct (TRd), les données pré-cachées dans une direction de réponse de l'itinéraire de transmission opposée à la direction de transmission vers le dispositif terminal particulier ; et
si le dispositif terminal de réception de l'autre commerçant qui a reçu la demande de fourniture du dispositif terminal de réception du commerçant direct stocke les données pré-cachées, fournir, avec le dispositif terminal de réception de l'autre commerçant, les données pré-cachées au dispositif terminal particulier dans la direction de réponse de l'itinéraire de transmission.
